# EUROPÄISCHE PATENTSCHRIFT

(11) **EP 0 934 690 B1**
(45) Veröffentlichungstag und Bekanntmachung des Hinweises auf die Patenterteilung: **14.05.2003**
(21) Anmeldenummer: 99100850.9
(22) Anmeldetag: 19.01.1999
(51) Int. Cl.: A01D 57/20

(54) **Schwadeinrichtung**
Swathing device
Dispositif d'andainage

(30) Priorität: 04.02.1998 DE 19804250
(43) Veröffentlichungstag der Anmeldung: 11.08.1999
(73) Patentinhaber: DEERE & COMPANY, Moline, Illinois 61265-8098 (US)
(72) Erfinder: Welsch, Thomas, 66453 Gersheim (DE); Georgel, Pascal, 57410 Rahling (FR)
(74) Vertreter: Magin, Ludwig Bernhard

(56) Entgegenhaltungen:
- EP-A- 0 168 665
- EP-A- 0 406 766
- EP-A- 0 439 991
- EP-A- 0 779 020
- CA-A- 1 248 763
- DE-A- 19 645 629
- DE-C- 612 028
- FR-A- 2 483 736
- GB-A- 2 077 562

## Beschreibung

Die Erfindung betrifft eine Schwadeinrichtung mit einer Fördervorrichtung, die zu schwadendes Gut seitlich transportiert und die in eine das Gut annehmende Betriebsstellung und eine das Gut nicht annehmende Außerbetriebsstellung bringbar ist.

Die EP-A1-0 439 991 offenbart eine Schwadeinrichtung, die an ein Mähgerät angebaut ist und von diesem geemtetes Mähgut aufnimmt und seitlich ablegt oder in eine Außerbetriebsstellung gebracht werden kann, in der das Mähgut auf den Boden fällt. Die Schwadeinrichtung enthält eine aus mehreren parallel zueinander angeordneten Walzen bestehende Fördervorrichtung, die in der gleichen Richtung rotieren und somit das Mähgut zur Seite fördem. Die Drehzahl der Walzen kann variiert werden, um die Abwurfweite zu verändern.

Aus der EP-A1-0 165 602 geht eine Schwadeinrichtung hervor, die an ein Mähgerät angebaut werden kann und ein Förderband als Fördervorrichtung enthält. Diese Schwadeinrichtung kann je nach Bedarf an das Mähgerät angebaut werden und ist an dieses dann ortsfest angeschlossen. Das Förderband kann innerhalb der Fördervorrichtung seitlich verschoben werden, um das Mähgut unterschiedlich weit oder an verschiedenen Seiten abzugeben.

Gemäß der EP-A1-0 779 020 ist eine Schwadeinrichtung mittels paralleler Lenker auf einem Mähgerät seitwärts beweglich gelagert und kann somit verschiedene seitliche Stellungen gegenüber dem Mähgerät einnehmen, so dass das zu erzeugende Schwad unterschiedlich weit von dem Mähgerät angelegt werden kann. Um sicherzustellen, dass das Gut nicht verzettelt auf den Boden gelangt, ist ein Schild vorgesehen, gegen den das Gut geworfen wird, so dass sich eine mehr oder weniger exakte Seitenkante des Schwads ergibt.

Aus der FR-A-2 483 736 ist ein Mähschwader bekannt, der an der Auslassseite eines Mähwerks eine horizontal schwenkbare Schwadeinheit aufweist. Die Schwadeinheit kann in eine das gemähte Gut annehmende Stellung gebracht werden, fängt es auf und gibt es auf der linken Seite des Mähschwaders auf den Boden ab. Wenn die Schwadeinheit von dem Mähwerk weggeschwenkt ist, fällt das gemähte Gut auf den Boden. Auf diese Weise können zwei Schwade unmittelbar nebeneinander abgelegt werden.

Die EP-A1-168 665 offenbart ein Mähgerät mit einer Schwadablegeeinrichtung, die eine quer zur Fahrtrichtung bewegliche Fördereinrichtung aufweist und in einem Außerbetriebszustand von dem Mähgerät demontiert und auf dem Boden abgestellt wird.

Das der Erfindung zugrunde liegende Problem wird darin gesehen, dass Aufnahmevorrichtungen aktueller Feldhäcksler mehr Gut verarbeiten können, als in zwei Schwaden abgelegt ist.

Dieses Problem wird jeweils erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise ist es möglich, drei Schwade so nahe nebeneinander abzulegen, dass sie von einer nachfolgenden Emtemaschine mit einer Aufnahmebreite von circa vier Metem aufgenommen werden können.

Zur Erhöhung der Abwurfleistung kann ein Motor oder ein sonstiger Antrieb in seiner Drehzahl verstellt werden, so dass bei der Tendenz des Guts, seine Richtung und Geschwindigkeit beizubehalten, die Wurfparabel weiter seitlich der Fördervorrichtung endet. Mit einer Erhöhung der Abwurfleistung und einer seitlichen Verschiebung der Fördervorrichtung kann das Mähgut über einen sehr großen Abstand befördert werden.

Unter der Vielzahl bekannter Ausführungen von Fördervorrichtungen erscheint die Verwendung eines Förderbands oder von parallelachsigen Förderwalzen aus Gründen des Gewichts, der Wartung und der Montage am geeignetsten.

Eine hohe Antriebsleistung bei guter Steuer- oder Regeleigenschaft wird von einem Hydraulikmotor geboten, der kostengünstig in vielerlei Ausführungen erhältlich ist.

Eine Möglichkeit, die Fördervorrichtung seitlich zu verlagern besteht darin, dass die fördernden Elemente mitsamt den Antriebselementen in einer Einheit zusammengefasst werden, die als eine Einheit verschiebbar gelagert ist.

Sowohl für die als eine Einheit zusammengefaßten Förderelemente wie auch für die Fördervorrichtung insgesamt kann eine Gleit- oder Rollenführung zur Verbindung mit einem Mähgerat vorgesehen werden, die bei geringer Reibung einen Lagewechsel zulässt.

Es ist zwar ausreichend, praktikabel und durchführbar, die jeweilige Betriebsart der Fördervorrichtung manuell einzustellen; eine spürbare Entlastung einer Bedienungsperson und gegebenenfalls eine genauere Schwadablage lässt sich jedoch dann erzielen, wenn eine Steueroder Regeleinrichtung vorgesehen ist, die die Lage eines bereits abgelegten Schwads oder den Stand zu emtenden und in Schwaden abzulegenden Guts erfasst und ein Signal zur Bewegung der Fördervorrichtung erzeugt. Somit können die Schwade sowohl dicht nebeneinander gelegt werden, als auch ein ausreichender Abstand zu noch stehendem Gut gewahrt werden.

Eine Alternative zu einem geschwindigkeitsveränderlichen Hydraulikmotor wird in der Verwendung eines Ventils, einer Blende, einer Drossel oder dergleichen gesehen, mit deren Hilfe der Hydraulikstrom gesteuert bzw. geregelt werden kann.

In der Zeichnung ist ein nachfolgend näher beschriebenes Ausführungsbeispiel der Erfindung dargestellt. Es zeigt
- Fig. 1: eine Emtemaschine mit einer erfindungsgemäßen Schwadeinrichtung in Draufsicht,
- Fig. 2: einen Vertikalschnitt entlang der Linie 2-2 und in der Blickrichtung der dazugehörigen Pfeile in Figur 1 und
- Fig. 3: drei mit der Schwadeinrichtung erreichbare Betriebszustände auf einem Feld.

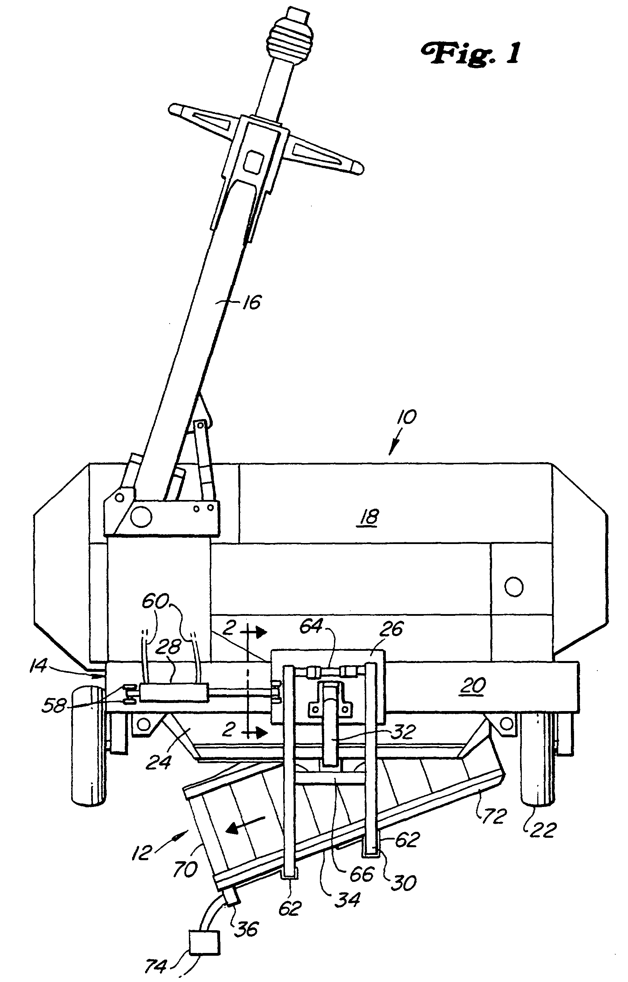

Eine in Figur 1 gezeigte Erntemaschine 10 ist als eine Mähmaschine ausgebildet und trägt an ihrem rückwärtigen Ende eine erfindungsgemäße Schwadeinrichtung 12.

Die Erntemaschine 10 weist einen Rahmen 14, eine Deichsel 16 und eine Ernteeinheit 18 auf, die zu einer gezogenen Einheit verbunden sind.

Der Rahmen 14 enthält einen Balken 20, der sich quer zur Fahrtrichtung der Erntemaschine 10 oberhalb der Ernteeinheit 18 erstreckt und sich endseitig über Räder 22 auf dem Boden abstützt. Der Rahmen 14 kann mittels der Deichsel 16, die sich im wesentlichen in der Fahrtrichtung erstreckt und an dem Rahmen 14 horizontal schwenkbar angebracht ist, an ein nicht gezeigtes Zugfahrzeug, z. B. einen Ackerschlepper angeschlossen werden.

Die Ernteeinheit 18 besteht bei der dargestellten Mähmaschine aus einem nicht gezeigten Mähbalken oder einer anderen Art eines Mähwerks und kann wahlweise auch eine nicht gezeigte Quetsch- oder Anwelkeinheit zwischen dem Mähwerk und der Schwadeinrichtung 12 enthalten. An dem rückwärtigen und sich unter den Balken 20 erstreckenden Endbereich der Ernteeinheit 18 ist ein Abgabegehäuse 24 vorgesehen, dessen Abgabeöffnung wesentlich schmaler ist als die Aufnahmebreite des Mähwerks. In einem Außerbetriebszustand der Schwadeinrichtung 12 entspricht die Breite der Abgabeöffnung im wesentlichen der Breite des Schwads. Diese Ernteeinheit 18 ist somit geeignet, über eine große Breite Erntegut von dem Boden zu trennen und es in einem schmalen Schwad auf den Boden abzulegen.

Die Schwadeinrichtung 12 enthält in dem gezeigten Ausführungsbeispiel einen Schlitten 26, einen ersten Stellmotor 28, eine Tragevorrichtung 30, einen zweiten Stellmotor 32, eine Fördervorrichtung 34 und einen Antrieb 36.

Der Schlitten 26 ist in der Form eines auf dem Kopf stehenden "U" ausgebildet und nimmt in seinem Innern den Balken 20 mit einem Großteil seines Querschnitts auf. Auf den Innenseiten der vertikalen Schenkel 38 ist jeweils eine horizontal verlaufende Achse zur Aufnahme einer vorderen und einer rückwärtigen Rolle 40, 42 vorgesehen. Die Rolle 40 stützt sich an der Unterseite einer an die vordere obere Kante des Balkens 20 anschließenden Schiene 44 ab, die sich bis nahezu an die Innenseite des Schenkels 38 erstreckt. In nicht gezeigter Weise können zwischen der Endseite der Schiene 44 und der Innenfläche des Schenkels 38 Gleitschienen oder dergleichen vorgesehen werden, die bei einem evtl. Kontakt die Reibkräfte reduzieren.

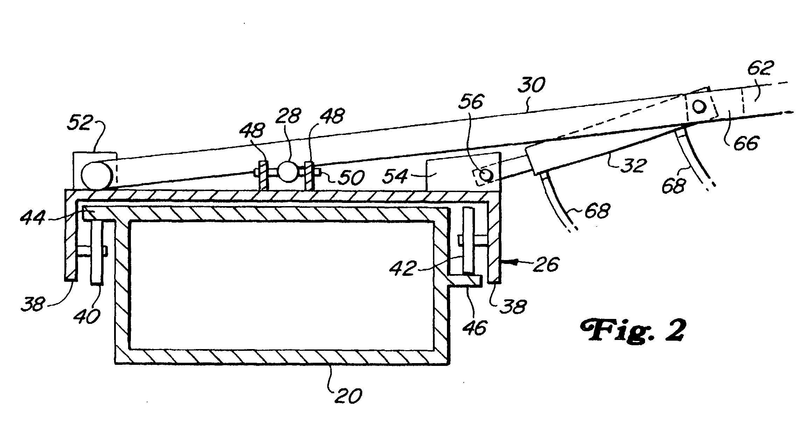

Die rückwärtige Rolle 42 stützt sich auf der Oberseite einer Schiene 46 ab, die sich ungefähr auf der halben Höhe der rückwärtigen Seite des Balkens 20 horizontal erstreckt. Auch diese Schiene 46 reicht mit ihrer außenliegenden Kante bis nahezu an die Innenseite des Schenkels 38 heran und kann mit Gleitbelägen versehen sein. Die einmal unten und einmal oben vorgesehene Anlage der Rollen 40, 42 an den Schienen 44, 46 hat ihre Ursache in der Anbringung und dem Verlauf der Tragevorrichtung 30, die ein Kippen des Schlittens 26 um die Längsachse des Balkens 20 im Uhrzeigerdrehsinn mit Blick auf Figur 2 bewirkt. Andere Lagerungen des Schlittens 26 auf dem Balken 20 sind möglich, so z. B. mit Gleitschienen, Kugellagern oder dergleichen. Bei jeder Lagerungsart ist jedoch darauf zu achten, daß die Länge der Lagerfläche im Verhältnis zur Breite des Balkens 20 so bemessen ist, daß ein Verkanten nicht eintreten kann. Die Schienen 44, 46 können mit dem Balken 20 einstückig ausgebildet sein oder nachträglich an diesen angebracht werden, z. B. durch Schrauben oder Schweißen.

Ungefähr auf der halben Breite des Schlittens 26 sind auf seiner Oberfläche zwei vertikale Stege 48 angebracht, durch die sich ein Bolzen 50 horizontal und quer zur Längsachse des Balkens 20 erstreckt. Oberhalb der vorderen Rolle 40 ist auf die Oberfläche des Schlittens 26 ein Lager 52 zur vertikal schwenkbaren Aufnahme der Tragevorrichtung 30 befestigt, das in herkömmlicher Weise ausgebildet sein kann. Oberhalb der rückwärtigen Rolle 42 sind zwei parallel zueinander verlaufende, beabstandete vertikale Stege 54 vorgesehen, durch die sich ebenfalls ein Bolzen 56 in der Längsrichtung des Balkens 20 erstreckt.

Der Schlitten 26 wahrt grundsätzlich mit seiner Innenfläche zwischen den Stegen 46, 48 einen Abstand zu der Oberseite des Balkens 20, wobei allerdings auch dort Gleitbeläge vorgesehen werden können, um einen Reibkontakt zu vermeiden, wenn sich aufgrund von Fahrbahnunebenheiten der Schlitten 26 auf den Balken 20 aufsetzen sollte.

Der erste Stellmotor 28 ist als ein doppelwirkender Hydraulikzylinder ausgebildet, der mit seinem kolbenstangenseitigen Ende zwischen den Stegen 48 mit dem Bolzen 50 und mit seinem zylinderseitigen Ende zwischen Stegen 58 mit einem nicht näher bezeichneten Bolzen gehalten ist, die auf der Oberseite des Balkens 20 befestigt sind. Zur Verstellung des Stellmotors 28 ist dieser über Hydraulikleitungen 60 an eine nicht gezeigte Steuer- oder Regelvorrichtung vorzugsweise auf dem Zugfahrzeug angeschlossen. Insbesondere mit Blick auf Figur 1 wird ersichtlich, daß der Schlitten 26 und mit ihm die Fördervorrichtung 34 mit dem ersten Stellmotor 28 entlang des Balkens 20 verfahren werden können.

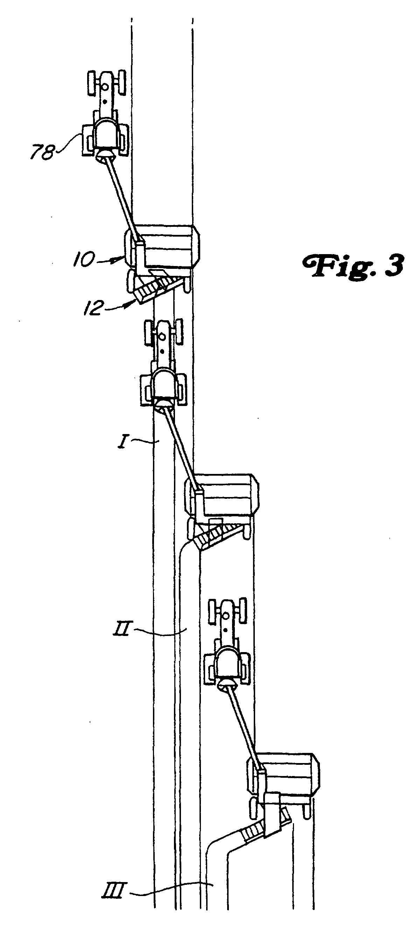

Die Tragevorrichtung 30 ist kragarmartig ausgebildet und erstreckt sich von dem Lager 52 über die gesamte Breite des Schlittens 26 und der Fördervorrichtung 34 bis weit hinter das Abgabegehäuse 24. Ausweislich der Abbildung in Figur 1 enthält die Tragvorrichtung 30 zwei vorzugsweise parallel zueinander verlaufende Arme 62, die über eine Welle 64 und eine Spange 66 miteinander verbunden sind. Während die Welle 64 in dem Lager 52 aufgenommen wird, dient die Spange 66 wie auch die Welle 64 der verwindungssteifen Verbindung beider Arme 62. Außerdem greift an der Spange 66 der zweite Stellmotor 32 zwischen nicht näher bezeichneten Stegen vertikal schwenkbar an. Die Arme 62 sind unterschiedlich lang und nehmen daher die Fördervorrichtung 34 derart auf, daß diese schräg zur Fahrtrichtung verläuft und deichselseitig nahezu hinter dem Rad 22 und auf der der Deichsel 16 abgewandten Seite neben dem Rad 22 endet. Auf diese Weise kann das Gut sicher von der Ernteeinheit 18 aufgefangen und seitlich von dieser abgelegt werden. Die Tragevorrichtung 30 kann mittels des zweiten Stellmotors 32 vertikal verschwenkt werden und somit die Fördervorrichtung 34 von einer Betriebsstellung (sh. Figur 1 und 2) unterhalb des Abgabegehäuses 24 in eine Außerbetriebsstellung oberhalb oder rückwärtig des Abgabegehäuses 24 geschwenkt werden, die lediglich in Figur 3 oben gezeigt ist.

Der zweite Stellmotor 32 ist als doppelwirkender Hydraulikzylinder ausgebildet und erstreckt sich zwischen den Stegen 54 auf dem Schlitten 26 und der Spange 66 zwischen den Armen 62. Die Zu- und Abfuhr von Hydraulikflüssigkeit erfolgt ebenfalls von der bereits erwähnten Steuer- oder Regelvorrichtung auf dem Zugfahrzeug über Hydraulikleitungen 68. Je nach dem gewählten Schwenkwinkel reicht auch ein einfachwirkender Hydraulikzylinder als zweiter Stellmotor 32 aus.

Die Fördervorrichtung 34 enthält in diesem Ausführungsbeispiel ein Förderband 70, das quer zur Laufrichtung verlaufende Förderstege enthält und in der mit dem Pfeil angedeuteten Richtung umläuft. Das Förderband 70 ist auf einem Tragrahmen 72 umlaufbar mittels nicht gezeigter Walzen gelagert und vermag daher das aus dem Abgabegehäuse 24 angenommene Gut mit Blick auf Figur 1 nach links zu fördern. Auf eine der Walzen ist der Antrieb 36 für das Förderband 70 aufgesetzt, der in diesem Ausführungsbeispiel als ein Hydraulikmotor ausgebildet ist, der über Hydraulikleitungen 74 gespeist wird, die wiederum von der vorzugsweise auf dem Zugfahrzeug befindlichen Steuer- oder Regelvorrichtung gespeist werden. In wenigstens einer der Hydraulikleitungen 74 kann eine Strömungsänderungsvorrichtung 76, z. B. in der Form eines Ventils, einer Blende, einer Drossel oder dergleichen vorgesehen sein, mit deren Hilfe die Drehzahl des Antriebs 36 verändert werden kann.

Ausgehend von der bisherigen Beschreibung und mit Blick auf Figur 3 wird im folgenden die Funktion der erfindungsgemäßen Schwadeinrichtung 12 erläutert.

Figur 3 zeigt die Erntemaschine 10 mit der Schwadeinrichtung 12 und gezogen von einem Zugfahrzeug 78 in drei verschiedenen Betriebssituationen, die von oben nach unten beschrieben werden.

In der oben dargestellten Situation ist die Fördervorrichtung 34 der Schwadeinrichtung 12 angehoben, so daß das gemähte Gut zwischen den Rädern 22 der Erntemaschine 10 auf den Boden fällt und in einem ersten Schwad I liegen bleibt.

In der darunter gezeigten Betriebsart ist die Fördervorrichtung 34 abgesenkt und nimmt aus dem Abgabegehäuse 24 kommendes Gut auf, um es in einem zweiten Schwad II im wesentlichen hinter dem linken Rad 22 abzulegen. Während dieses Vorgangs fährt das Zugfahrzeug 78 derart, daß es das Schwad I zwischen seinen nicht näher bezeichneten Rädern aufnimmt. Die Schwade I und II kommen unmittelbar nebeneinander zu liegen.

Bei der unten gezeigten Betriebsart fährt das Zugfahrzeug 78 auf gemähtem Feld und nicht über das Schwad II. Die Fördervorrichtung 34 der Schwadeinrichtung 12 behält ihre untere Stellung bei, ist in dem gezeigten Ausführungsbeispiel aber nach links verschoben. Auf diese Weise wird ein Schwad III nicht hinter dem linken Rad 22 sondern links von ihm gebildet. Es ist zu erkennen, daß auch dieses dritte Schwad III dicht neben dem Schwad II liegt.

Es ist auch möglich, die Schwadeinrichtung 12 nach links zu verschieben und zusätzlich den Antrieb 36 schneller laufen zu lassen, so daß das Gut ausreichend weit links von der Erntemaschine 10 gebildet werden kann.

Die Schwade I - III sind zusammen schmaler als vier Meter und können mit einer einzigen Pick-up z. B. eines Feldhäckslers aufgenommen werden.

## Patentansprüche

1. Schwadeinrichtung (12) mit einer Fördervorrichtung (34), mit der zu schwadendes Gut seitlich transportiertbar ist, mit einer Tragvorrichtung (30), die so ausgebildet ist, dass die Fördervorrichtung (34) in eine das Gut annehmende Betriebsstellung und eine das Gut nicht annehmende Außerbetriebsstellung bringbar ist, und mit einem Schlitten (26) zur Bewegung der Schwadeinrichtung (12) quer zur Fahrtrichtung, während sich die Fördervorrichtung (34) in der Betriebsstellung befindet.

2. Schwadeinrichtung nach Anspruch 1 **dadurch gekennzeichnet, dass** die Abwurfleistung der Fördervorrichtung (34) quer zur Fahrtrichtung veränderbar ist.

3. Schwadeinrichtung nach Anspruch 1 oder 2, **dadurch gekennzeichnet, dass** die Fördervorrichtung (34) ein Förderband (70) oder nebeneinander angeordnete Förderwalzen enthält.

4. Schwadeinrichtung nach einem oder mehreren der vorherigen Ansprüche, **dadurch gekennzeichnet, dass** die Fördervorrichtung (34) mittels eines geschwindigkeitsvariablen Antriebs (36) insbesondere in der Art eines Hydraulikmotors antreib- oder verschiebbar ist.

5. Schwadeinrichtung nach einem oder mehreren der vorherigen Ansprüche, **dadurch gekennzeichnet, dass** das Förderband (70) oder die Förderwalzen in einer baulichen Einheit zusammengefasst und mit einer Tragevorrichtung (30) seitenbeweglich gelagert sind.

6. Schwadeinrichtung nach einem oder mehreren der vorherigen Ansprüche, **dadurch gekennzeichnet, dass** der Schlitten (26) eine Gleit- oder Rollenführung zur Verbindung mit einer insbesondere als Mähgerät ausgebildeten Emtemaschine (10) aufweist.

7. Schwadeinrichtung nach einem oder mehreren der vorherigen Ansprüche, **gekennzeichnet durch** eine Steuer- oder Regeleinrichtung, die die Lage eines bereits abgelegten Schwads oder den Stand zu emtenden und in Schwaden abzulegenden Guts erfasst und ein Signal zur Bewegung oder Beschleunigung der Fördervorrichtung (34) oder der Schwadeinrichtung (12) erzeugt.

8. Schwadeinrichtung nach einem oder mehreren der vorherigen Ansprüche, **dadurch gekennzeichnet, dass** die Fördervorrichtung (34) hydraulisch antreib- oder verschiebbar ist und die Änderung der Lage oder Geschwindigkeit mittels wenigstens einer Strömungsänderungsvorrichtung (76) erfolgt.

## Claims

1. A windrowing device (12) with a conveyor device (34), with which the crop to be windrowed can be transported sideways, a support device (30) which is so formed that the conveyor device (34) can be brought into an operating position receiving the crop and an inoperative position not receiving the crop, and a slide (26) for moving the windrowing device (12) transverse to the direction of travel while the conveyor device (34) is in the operating position.

2. A windrowing device according to claim 1, **characterized in that** the discharge capacity of the conveyor device (34) transverse to the direction of travel can be varied.

3. A windrowing device according to claim 1 or 2, **characterized in that** the conveyor device (34) includes a conveyor belt (70) or conveyor rollers arranged alongside one another.

4. A windrowing device according to one or more of the preceding claims, **characterized in that** the conveyor device (34) can be driven or displaced by means of variable speed drive unit (36), especially in the form of a hydraulic motor.

5. A windrowing device according to one or more of the preceding claims, **characterized in that** the conveyor belt (70) or the conveyor rollers are combined in a structural unit and are mounted with a support device (30) to be movable sideways.

6. A windrowing device according to one or more of the preceding claims, **characterized in that** the slide (26) comprises a sliding or rotter guide for connection to a harvesting machine (10) formed in particular as a mower.

7. A windrowing device according to one or more of the preceding claims, **characterized by** a control or regulating device which detects the location of an already deposited windrow or the stand of crop to be harvested and deposited in windrows and generates a signal for moving or accelerating the conveyor device (34) or the windrowing device (12).

8. A windrowirig device according to one or more of the preceding claims, **characterized in that** the conveyor device (34) is hydraulically drivable or movable and the alteration of the position or speed is effected by means at least one flow varying device (76).

## Revendications

1. Dispositif d'andainage (12) comportant un dispositif de convoyage (34), à l'aide duquel la matière à andainer est transportable latéralement, un dispositif de support (30) qui est agencé de telle sorte que le dispositif de convoyage (34) peut être amené dans une position de fonctionnement, dans laquelle il reçoit la matière, et une position hors fonctionnement, dans laquelle il ne reçoit pas la matière, et un chariot (26) servant à déplacer le dispositif d'andainage (12) transversalement par rapport à la direction de déplacement, alors que le dispositif de convoyage (34) est dans la position de fonctionnement.

2. Dispositif d'andainage selon la revendication 1, **caractérisé en ce que** la puissance d'éjection du dispositif de convoyage (34) transversalement par rapport à la direction peut être modifiée.

3. Dispositif d'andainage selon la revendication 1 ou 2, **caractérisé en ce que** le dispositif de convoyage (34) contient une bande convoyeuse (70) ou des cylindres de convoyage disposés côte-à-côte.

4. Dispositif d'andainage selon une ou plusieurs des revendications précédentes, **caractérisé en ce que** le dispositif de convoyage (34) peut être entraîné ou déplacé à l'aide d'un dispositif d'entraînement à vitesse variable (36), notamment agencé sous la forme d'un moteur hydraulique.

5. Dispositif d'andainage selon une ou plusieurs des revendications précédentes, **caractérisé en ce que** la bande convoyeuse (70) ou les rouleaux de convoyage sont réunis sous la forme d'une unité de construction et sont montés de manière à être déplaçables latéralement avec un dispositif de support (30).

6. Dispositif d'andainage selon une ou plusieurs des revendications précédentes, **caractérisé en ce que** le chariot (26) comporte un guide à glissière (ou à rouleaux) destiné à être relié à une moissonneuse (10) agencée notamment sous la forme d'une faucheuse.

7. Dispositif d'andainage selon une ou plusieurs des revendications précédentes, **caractérisé par** un dispositif de commande ou de régulation, qui détecte la position d'un andain déjà déposé ou l'état de la matière à récolter et devant être déposée selon des andains et produit un signal pour le déplacement ou l'accélération du dispositif de convoyage (34) ou du dispositif d'andainage (12).

8. Dispositif d'andainage selon une ou plusieurs des revendications précédentes, **caractérisé en ce que** le dispositif de convoyage (34) peut être entraîné ou déplacé par voie hydraulique et la variation de la position ou de la vitesse s'effectue à l'aide d'au moins un dispositif de modification d'écoulement (76).
